# EUROPEAN PATENT SPECIFICATION

(11) **EP 3 756 893 B1**
(45) Date of publication and mention of the grant of the patent: **31.05.2023**
(21) Application number: 20181288.0
(22) Date of filing: 19.06.2020
(51) Int. Cl.: B41J 2/14, B41J 3/407, B41J 25/304, B41J 25/308

(54) **SYSTEM AND METHOD FOR ANALYZING THE SURFACE OF A THREE-DIMENSIONAL OBJECT TO BE PRINTED BY A PRINTHEAD MOUNTED TO AN ARTICULATING ARM**
SYSTEM UND VERFAHREN ZUR ANALYSE DER OBERFLÄCHE EINES DREIDIMENSIONALEN OBJEKTS, DAS MIT EINEM AN EINEM GELENKARM MONTIERTEN DRUCKKOPF BEDRUCKT WERDEN SOLL
SYSTÈME ET PROCÉDÉ D'ANALYSE DE LA SURFACE D'UN OBJET TRIDIMENSIONNEL À IMPRIMER PAR UNE TÊTE D'IMPRESSION MONTÉE SUR UN BRAS ARTICULÉ

(30) Priority: 26.06.2019 US 201916452960
(43) Date of publication of application: 30.12.2020
(73) Proprietor: Xerox Corporation, Webster, NY 14580 (US)
(72) Inventor: DANIELS, Marc D., Webster, NY New York 14580 (US); RASHED, Husein Naser, Webster, NY New York 14580 (US); IRELAND, Jonathan R., Lancaster, PA Pennsylvania 17602 (US)
(74) Representative: Gill Jennings & Every LLP

(56) References cited:
- EP-A1- 3 235 355
- WO-A1-2019/041027
- US-A1- 2017 253 024

## Description

### Technical Field

This disclosure relates generally to devices that produce ink images on three-dimensional objects by ejecting ink drops from printheads, and more particularly, to devices that form images on three-dimensional objects by ejecting ink drops from printheads that maneuver through three-dimensional space.

### Background

Inkjet imaging devices eject liquid ink from printheads to form images on an image receiving surface. The printheads include a plurality of inkjets that are arranged in some type of array. Each inkjet has a thermal or piezoelectric actuator that is coupled to a printhead controller. The printhead controller generates firing signals that correspond to digital data for images. Actuators in the printheads respond to the firing signals by expanding into an ink chamber to eject ink drops onto an image receiving member and form an ink image that corresponds to the digital image used to generate the firing signals.

Printers configured to eject ink drops onto the surface of three-dimensional (3D) objects are known. In some of these printers, the printhead is mounted to a robotic or articulated arm so the printhead can be maneuvered in three-dimensional space. In these printer, the size, shape and position of the surface areas to be printed are not known before the printing operation begins. Objects can vary in size from print job to print job. For example, items such as athletic apparel generally have a similar shape but they come in different sizes. Other objects may have the same size, such as a baseball glove, but they are frequently manufactured in a way that produces variations in the size of the area to be printed. For example, the printable area for a junior size fielder's glove is known to have a surface large enough to accommodate a custom logo, but each individual glove, whether hand or machine sewn, is prone to inconsistencies from one glove to the next. Such objects have unprintable areas, such as the areas between the fingers of the gloves. The variety of objects that can be printed by such a printer also presents problems for operating the printer to ensure the ink images are properly formed and positioned on the surface of these different objects with varying contours and sizes.

Other aspects of the printing system also compound the problems for reliably printing 3D objects. In a six-axis robotic printer, the printhead has a limited range of motion. Also, the faceplate of the printhead is flat and has a length and width sufficient to accommodate the array of inkjet nozzles in the faceplate. The faceplate has to be able to be positioned within a predetermined gap to the object surface to be printed so the ink drops land where they should for image formation. Typically, the minimum gap for accurate placement of an ink drop is about 1 mm from the surface of flat objects. The maximum gap for accurate placement of an ink drop, however, is not an absolute because it depends upon several factors. Among these factors are the type of ink, the ink's viscosity, its temperature, the velocity and mass of the ink drops, and any motion in the air surrounding the area to be printed. Ink viscosity and temperature dictate print parameters, such as the firing frequencies and wave form voltages used to operate the actuators in the inkjets. Thus, the maximum print gap distance is typically no more than a few to several millimeters. Being able to identify the printing parameters for different sizes of printheads printing with different types of inks on a wide range of object types and sizes would be beneficial.
US 2017/0253024 relates to apparatus and method for printing on non-cylindrical surfaces having circular symmetry.

### SUMMARY

A method of 3D object printer operation according to accompanying claim 4 is provided and enables a variety of object types and sizes to be printed by a printer having a printhead mounted to a robotic arm having six degrees of freedom.

A 3D object printer according to accompanying claim 1 implements the method that enables a variety of object types and sizes to be printed by a printer having a printhead mounted to a robotic arm having six degrees of freedom.

### BRIEF DESCRIPTION OF THE DRAWINGS

The foregoing aspects and other features of a system and method that enable a variety of object types and sizes to be printed by a printer having a printhead mounted to a robotic arm having six degrees of freedom are explained in the following description taken in connection with the accompanying drawings.
FIG. 1 is a schematic drawing of an inkjet printer having an articulated arm that moves a printhead through three-dimensional space to print ink images on a variety of 3D object types and sizes accurately and reliably.
FIG. 2 is a flow diagram of a process for operating the printer of FIG. 1 to identify an area for image formation on an object in the printer.
FIG. 3 is a block diagram for the area identification performed by the process of FIG. 2.
FIG. 4A, FIG. 4B, and FIG. 4C depict scenarios where a portion of an object to be printed is either too convex, too concave, or both too convex and too concave to be printed.

### DETAILED DESCRIPTION

For a general understanding of the environment for the system and method disclosed herein as well as the details for the system and method, reference is made to the drawings. In the drawings, like reference numerals have been used throughout to designate like elements. As used herein, the word "printhead" encompasses any apparatus that ejects a marking material to produce ink images on the surfaces of objects.

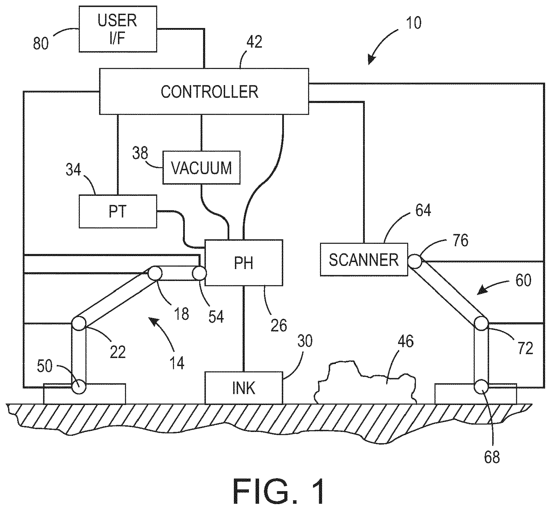

FIG. 1 illustrates an inkjet printer 10 having an articulated arm 14 that is configured with a printhead 26 to form ink images on the surfaces of obj ects, such as object 46, located in the vicinity of the printhead. To perform an analysis of the surface area of the object 14, another articulated arm 60 that is configured with a scanner 64 to generate a graph of the surface of the object 46 that is analyzed by the controller 42 as described more fully below to identify an area of the object for printing and the printing parameters necessary for performing the print job. In other embodiments, the scanner 64 is mounted to a fixed position at a perspective that enables the scanner to generate a depth map of a commonly printed surface of an object. The scanner can be a digital camera or it can be a sensing device that generates a surface map of an object that indicates the undulations in the surface of the object. Such sensing devices include laser, lidar, ultrasound surface mapping devices or the like. The articulated arms 14 and 60 can be, for example, a six-axis robotic arm, such as the Epson C4 robotic arm available from Epson America, Inc. of Long Beach, CA. The articulated arm 14 is configured for movement that enables the printhead to move opposite all of the sides, top, and back of the object 46 but the drawing scale does not comport with this range to simplify the figure. The articulated arm 14 includes servos 18, 22, 50, and 54 that join arm segments to one another and these servos are configured to move the arm segments vertically, horizontally, and combinations of these directions. Additionally, the servo 54 is operated to tilt and rotate the printhead 26 to produce changes in the yaw, roll, and pitch of the printhead. As used in this document, the term "vertical" means a direction of movement that changes the gravitational potential of the component or portion of the component being moved. As used in this document, the term "horizontal" means a direction of movement that maintains the gravitational potential on the component or portion of the component at the gravitational potential it possessed prior to the movement. When the printhead is held at a horizontal position, the longitudinal axis of the printhead face is at a same gravitational potential through the printhead. Three orthogonal axes centered in the printhead then define an X axis that is corresponds to the longitudinal axis, a Y axis that is at the same gravitational potential of the X axis and forms a horizontal plane with the X axis, and a Z axis that is perpendicular to both the X and Y axes and corresponds to a change in the gravitational potential of the printhead or a portion of the printhead. Thus, "yaw" is defined as rotation of the printhead about the Z axis in the X-Y plane, "pitch" is defined as rotation about X axis in the Y-Z plane, and "roll" is defined as Y axis in the X-Z plane. The controller 42 generates signals that operate the servos to move the arm segments of the articulated arm 14 and to tilt and roll the printhead to position the printhead 26 at various locations and orientations opposite the object 46.

In systems where a printhead remains in a horizontal orientation at a predetermined distance above the free surface of the ink in a fixedly mounted ink reservoir, vacuum control is not necessary to maintain an appropriate meniscus in the inkjets of the printhead since the hydrostatic pressure in the printhead remains relatively constant. Where the printhead moves with respect to the level of the ink in the ink reservoir of the ink delivery system 30, which is fixedly mounted with reference to the base of the robotic arm, then more robust control of the meniscus is required.

The system 10 shown in FIG. 1 moves the printhead 26 relative to the ink level in the ink reservoir of the ink delivery system 30. To address pressure changes in the printhead arising from this movement, a vacuum source 38 is operatively connected to the manifold internal to the printhead 26 or to the head space in the reservoir of the ink delivery system 30 to maintain the negative ink meniscus in the nozzles of printhead 26 while the printhead is being maneuvered through three-dimensional space by the articulated robotic arm 14. The controller 42 operates the vacuum system 38 to keep the pressure within the manifold of the printhead 26 at a predetermined value by using the signal generated by pressure transducer 34. Pressure transducer 34 is configured to generate a signal indicating the ink pressure within the manifold of the printhead 26. The pressure transducer can be mounted to or within the printhead 26 or operatively connected to the manifold by a pneumatic tube or the like.

As the printhead moves, the vacuum level is adjusted for acceleration of the printhead and ink in the supply tubes in any direction that produces hydraulic water hammer to occur within the printhead and for maintaining the meniscus when elevation changes occur. A the controller is configured to implement a feed forward control loop that preempts pressure changes by beginning the vacuum control before the printhead movement occurs because the controller is using robotic arm control data to operate the robotic arm so the controller uses the path data and is able to identify the dynamic forces acting on the ink in the supply tubes and printhead so it can operate the vacuum source 38 to reduce the overshoot and lag time in the vacuum control. For example, the controller can select a plurality of positions along the path at predetermined increments of vertical displacement and operate the vacuum using a vacuum value associated with the first selected position and then as the printhead nears that position begin operating the vacuum with another vacuum value associated with a next selected position along the path. This operation of the vacuum continues until the last position in the path is reached.

The articulated arm 60 in FIG. 1 is configured for movement that enables the scanner to move opposite all of the sides, top, and back of the object 46 but the drawing scale does not comport with this range to simplify the figure. The articulated arm 60 includes servos 68, 72, and 76 that join arm segments to one another and these servos are configured to move the arm segments vertically, horizontally, and combinations of these directions. Additionally, the servo 76 is operated to tilt and rotate the scanner 64 to produce changes in the yaw, roll, and pitch of the printhead. These terms have been defined above with reference to the articulated arm 14. The controller 42 generates signals that operate the servos to move the arm segments of the articulated arm 60 and to tilt and roll the scanner 64 so the scanner is at various locations and orientations opposite the surface of the object 46. The signals generated by the scanner 64 indicate the topography of the surface of the object 46 opposite the scanner and within its field of vision. The signals sent to the servos of the articulated arm 60 enable the controller 42 to identify the positions of the surface features in the three-dimensional space opposite the scanner. The scanner 64 can be a Keyence laser scanner, available from Keyence Corporation of America, Itasca, IL, or its equivalent. The scanner can implement other non-contact scan technology, including an array of fixed position cameras or sensors located above the 3D object, or that uses LASER, LIDAR, or ultrasonic sensors that are movably mounted on rails or a robotic arm that are maneuverable above the object. These sensors can be mounted to a robotic arm separate from the one on which the printhead is mounted, as shown in FIG. 1, or they can be mounted to the same robotic arm to which the print head is mounted. Additionally, the scanner can be a hand held 3D LASER scanner, such as the VIUscan 3D laser scanner available from Creaform USA Inc. of Irvine, California.

The controller 42 can be implemented with general or specialized programmable processors that execute programmed instructions. The instructions and data required to perform the programmed functions can be stored in memory associated with the processors or controllers. The processors, their memories, and interface circuitry configure the controllers to perform the operations previously described as well as those described below. These components can be provided on a printed circuit card or provided as a circuit in an application specific integrated circuit (ASIC). Each of the circuits can be implemented with a separate processor or multiple circuits can be implemented on the same processor. Alternatively, the circuits can be implemented with discrete components or circuits provided in very large scale integrated (VLSI) circuits. Also, the circuits described herein can be implemented with a combination of processors, ASICs, discrete components, or VLSI circuits. During printing, image data for an image to be produced are sent to the controller 42 from either a scanning system or an online or work station connection for processing and generation of the printhead control signals output to the printhead 26. Additionally, the controller 42 uses signals from the pressure transducer 34 to operate the vacuum 38 to maintain the negative ink meniscus at the printhead as it is moved during printing of the object.

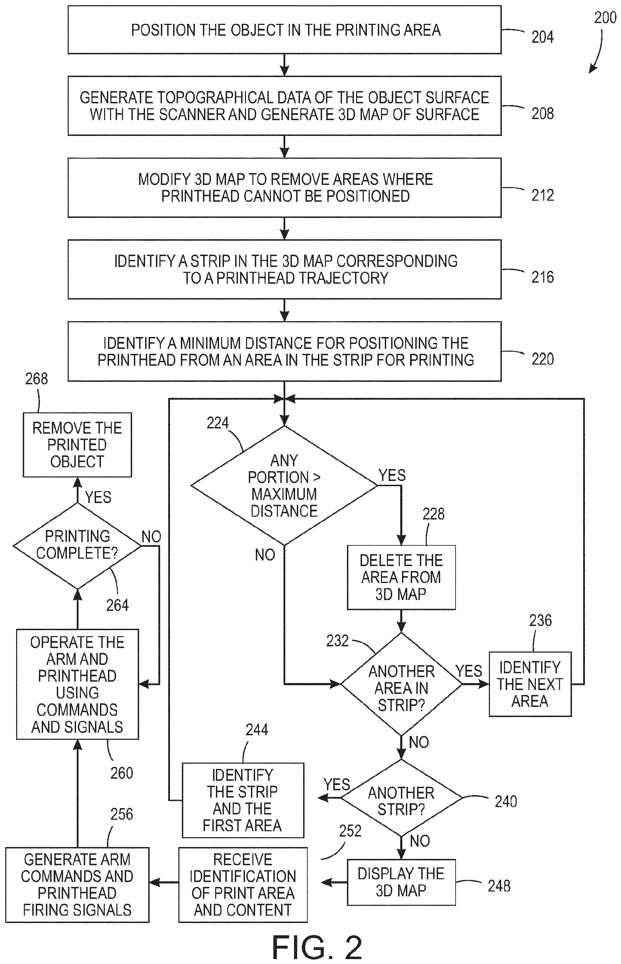

A process 200 for identifying surface area of the object that can be reached by the printhead 26 and printed is shown in FIG. 2. In the discussion below, a reference to the process 300 performing a function or action refers to the operation of a controller, such as controller 42, to execute stored program instructions to perform the function or action in association with other components in the printer. The process 200 is described as being performed by the printer 10 of FIG. 1 for illustrative purposes.

Prior to printing an image on the object 46, the object to be printed is placed within the printing area of system 10 (block 204). The controller 42 operates the scanner 64 to generate topographical data corresponding to the object's surface and generates a three-dimensional map of the object surface using the topographical data received from the scanner (block 208). If the scanner is mounted to an articulated arm as shown in FIG. 1, the controller also operates the servos of the articulated arm 60 to move the scanner over the surface area of the object 46 as the scanner is operated. As used in this document, the term "scanner" means any device that generates topographical data that can be used to generate a three-dimensional map of an object's surface. As used in this document, the term "topographical data" means data that either directly provides a three-dimensional map of an object's surface or data that can be converted into a three-dimensional map that identifies the undulations in a surface. As used in this document, the term "three-dimensional map of an object surface" means a digital representation of an object surface that depicts heights and depths of the undulations in an object's surface. The three-dimensional (3D) map is then modified by eliminating the areas in the map that are outside of the range of the articulated arm and printhead (block 212).

With further reference to FIG. 2, a strip on an edge of the modified 3D map is then identified that corresponds to a width of the printhead 26 as the process moves a virtual printhead over the object in a process direction (block 216). As used in this document, the term "virtual printhead" means a data representation of the printhead to be used for printing that corresponds to the dimensions of the inkjet array in the printhead and movement of the printhead with respect to the surface of the object to be printed. As used in this document, the term "strip" means a plurality of contiguous areas in the process direction in the three-dimensional map of the surface of the object over which the printhead can be placed with each area corresponding to the dimensions of a printhead faceplate as the printhead is moved over the areas to print a portion of an image in each area. As used in this document, the term "process direction" means the direction of movement of the printhead as it ejects ink onto the object and the term "cross-process direction" means an axis that is perpendicular to the process direction in the plane of the process direction movement. The controller then identifies a minimum distance for accurate ink drop placement where the faceplate of the printhead is positioned to begin printing the surface area of the object that corresponds to the strip in the 3D map. (block 220). This minimum distance is determined with reference to all of the inkjets in the printhead if the area to be printed is flat and is determined with reference to only one or a few inkjets over the highest point in the area if the area to be printed is curved. At this printhead position, the process determines if any portion in the area in the strip opposite a nozzle in the printhead is greater than a predetermined maximum distance for accurate ink drop placement (block 224). If it is, then the area in the strip is removed from the identified strip in the 3D map (block 228). Once the portions opposite the inkjets in the area have been evaluated, then the process determines whether another area in the strip is to be evaluated (block 232). If another area is to be evaluated, the next area in the strip corresponding to the dimensions of the nozzle array in the faceplate is identified (block 236) and evaluated (blocks 220 to 232). When all of the areas of the identified strip have been identified as being printable or deleted from the strip (block 232), the process determines if another strip in the 3D map needs to be evaluated (block 240). A new strip in the cross-process direction away from the edge of the 3D map for the first strip and the first area are identified (block 244) and the next strip is evaluated (blocks 220 to 232). This processing continues until the process determines all of the strips in the 3D map have been evaluated (block 240). Each new strip evaluated after the initial strip is evaluated is a predetermined spatial shift from the immediately previously evaluated strip. This predetermined spatial shift is the width of one position in the cross-process direction in the 3D map in one embodiment, although other larger spatial shifts could be used, for example, to reduce the number of strips evaluated to conserve computing resources.

Once all of the strips on the 3D map have been evaluated and the areas having a portion outside the maximum distance for accurate ink drop placement or a portion closer than the minimum distance for accurate ink drop placement are deleted from the map, the remaining 3D map of the surface area on the object that can be printed is displayed on user interface 80 (block 248). Through the user interface, the user inputs the area on the displayed 3D map in which an image is to be printed and the content of the image (block 252). The controller generates the commands for operating the articulated arm to move the printhead along a path where the printhead can print the image at the identified area (block 256). The controller operates the articulated arm and the printhead to print the image on the object on the area of the object corresponding to the identified area in the displayed 3D map (block 260). After the printing is completed (block 264), the object is removed from the system 10 (block 268). As used in this document, the term "can be printed" means a surface area of an object, all of which is within the maximum distance for accurate ink drop placement and is no closer than the minimum distance for accurate ink drop placement when a faceplate of a printhead is opposite that surface area. As used in the discussion of this process and elsewhere in this document, the term "maximum distance for accurate ink drop placement" means the maximum distance between the nozzle of an inkjet of a printhead and the surface of an object opposite the nozzle at which the inkjet can accurately eject an ink drop for image formation and the term "minimum distance for accurate ink drop placement" means the minimum distance between the nozzle of an inkjet of a printhead and the surface of an object opposite the nozzle at which the inkjet can accurately eject an ink drop for image formation.

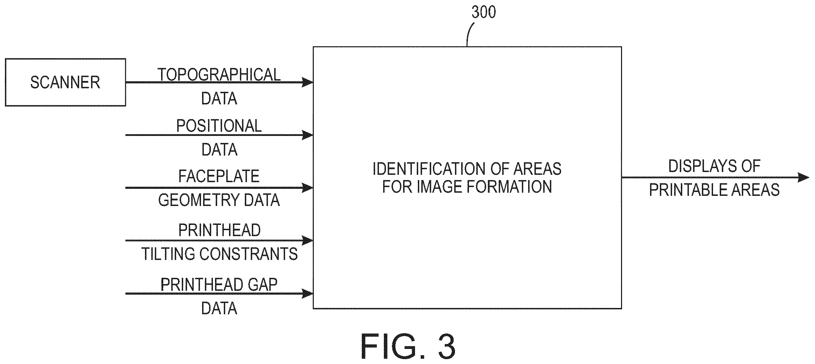

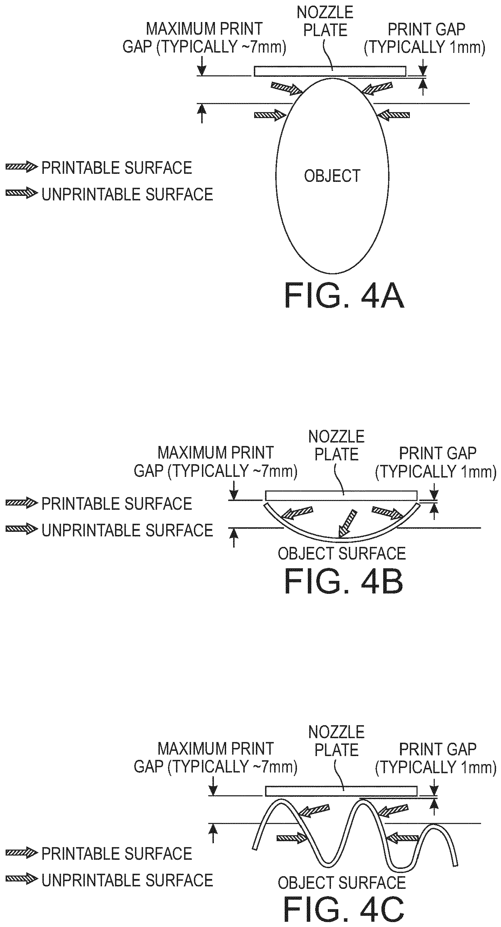

In more detail and with reference to FIG. 3, the process for identification of the areas for image formation 300 has a set of inputs and a set of outputs. The inputs include the topographical data of the object surface generated by the scanner, the positional data used to position the scanner over the surface of the object, faceplate geometry data, constraints on the tilting of the printhead, and data for an envelope of where the printhead faceplate can be placed with respect to the surface of the object. The outputs of the identification process in FIG. 3 are the visuals representations of the possible printhead trajectories over the surface of the object displayed on the user interface. The flatness criteria used to evaluate portions of the object's surface are the constant minimum distance between the position of at least one inkjet in the faceplate of the virtual printhead and the object surface and the calculated distances between the remaining inkjets in the faceplate of the virtual printhead and the object surface. The constant minimum distance, or print gap as it is also known, is chosen to be a constant parameter, typically 1 mm, and is maintained for the at least one position on the faceplate throughout all of the distance comparisons. If a data position in the 3D map is at a distance that is greater than the maximum distance, then the surface is too convex (FIG. 4A) or too concave (FIG. 4B) or both (FIG. 4C) to be printed. The minimum and maximum distance is determined using the angle of the faceplate relative to the surface portion being imaged, the distance between the inkjets opposite the heights of the surface portion at the angle of the faceplate, and the distance between the inkjets opposite the depths of the surface portion at the angle of the faceplate.

It will be appreciated that variants of the above-disclosed and other features, and functions, or alternatives thereof, may be desirably combined into many other different systems or applications.

## Claims

1. An object printer comprising:
a printhead (26) configured for movement in three-dimensional space;
a scanner (64) configured to generate topographical data of a surface of an object (46) opposite the scanner (64); and
a controller (42) operatively connected to the printhead (26) and the scanner (64), the controller (42) being configured to receive the topographical data from the scanner (64), determine using the topographical data whether the surface of the object (46) can be printed by the printhead (26) when the printhead (26) is opposite the surface of the object (46), and operate the printhead (26) when the printhead is opposite the surface of the object (46) to form an ink image on the surface of the object (46) when the controller (42) determines the surface of the object (46) can be printed by the printhead (26),
wherein the controller (42) is further configured to:
generate a three-dimensional map of the surface of the object (46) using the topographical data from the scanner (64); and
store the three-dimensional map in a memory operatively connected to the controller (42),
the controller (42) being further configured to:
identify a first strip in the three-dimensional map stored in the memory;
determine whether any inkjet in the printhead (26) is outside a maximum distance for accurate ink drop placement from an area in the first strip when the printhead (26) is moved to a position opposite a surface area of the object (46) that corresponds to the area in the first strip where no inkjet in the printhead (26) is closer than a minimum distance for accurate ink drop placement; and
delete the area in the first strip from the three-dimensional map stored in the memory when any portion of the surface area of the object (46) corresponding to the area in the first strip is outside the maximum distance for accurate ink drop placement when the printhead (26) is moved to the position opposite the surface area corresponding to the area in the first strip where no inkjet in the printhead (26) is closer than a minimum distance for accurate ink drop placement,
the controller (42) is further configured to:
compare the maximum distance for accurate ink drop placement to distances between nozzles in the printhead (26) and portions of the surface area of the object (46) that are opposite the nozzles when the printhead (26) is moved to the position opposite the surface area that corresponds to the area in the first strip where no inkjet in the printhead (26) is closer than a minimum distance for accurate ink drop placement; and
determine that the surface area that corresponds to the area in the first strip can be printed by the printhead (26) positioned opposite the surface area that corresponds to the area in the first strip where no inkjet in the printhead (26) is closer than a minimum distance for accurate ink drop placement when all the distances between the nozzles and the portions of the surface area of the object (46) that are opposite the nozzles are within the maximum distance for accurate ink drop placement,
the controller (42) being further configured to:
identify a plurality of additional areas in the first strip in a process direction;
determine whether each additional area in the plurality of additional areas in the first strip can be printed when the printhead (26) is moved to a position opposite the surface area of the object (46) that corresponds to each additional area; and
delete each area from the first strip in the three-dimensional map stored in the memory that cannot be printed when the printhead (26) is moved to the position opposite the surface area of the object (46) that corresponds to the additional area that cannot be printed,
the controller (42) being configured to:
identify another strip in the three-dimensional map stored in the memory that is shifted from the first strip by at least one data position in the three-dimensional map in the cross-process direction;
identify a plurality of areas in the other strip;
determine whether each area in the plurality of areas in the other strip can be printed when the printhead (26) is moved to a position opposite the surface area of the object (46) that corresponds to each area in the plurality of areas in the other strip; and
delete each area from the other strip in the three-dimensional map stored in the memory that cannot be printed when the printhead (26) is moved to the position opposite the surface area of the object (46) that corresponds to the area in the other strip,
the controller (42) being configured to:
identify additional strips in the three-dimensional map that are shifted from a previous strip by at least one data position in the three-dimensional map in the cross-process direction;
determine whether each area in each of the additional strips can be printed when the printhead (26) is moved to a position opposite the surface area of the object (46) that corresponds to each area in each of the additional strips; and
delete each area from the additional strips in the three-dimensional map stored in the memory that cannot be printed when the printhead (26) is moved to the position opposite the surface area of the object (46) that corresponds to the area in one of the additional strips,
the object printer being **characterized in that** the controller (42) is configured to:
display the three-dimensional map stored in the memory on a user interface after all of the strips in the three-dimensional map have been identified and all of the areas in each strip have been removed from the three-dimensional map that cannot be printed when the printhead (26) is moved to the position opposite the surface area of the object (46) that corresponds to the area; and
receive input from the user interface that identifies the areas in the displayed three-dimensional map that correspond to a surface area of the object (46) where an ink image is to be printed.

2. The object printer of claim 1 further comprising:
a first articulated arm (14) to which the printhead is mounted, the first articulated arm (14) having at least one servo (18, 22, 50, 54) that is configured to move the printhead (26) with six degrees of freedom within the three-dimensional space; and
the controller (42) is further configured to operate the at least one servo (18, 22, 50, 54) of the first articulated arm (14) to move the printhead (26) in the three-dimensional space to positions opposite the surface area of the object (46) corresponding to the identified areas and to operate the printhead (26) to form the ink image on the surface area of the object (46) corresponding to the identified areas.

3. The object printer of claim 2 further comprising:
a second articulated arm (60) to which the scanner (64) is mounted, the second articulated arm (60) having at least one servo (68, 72, 76) that is configured to move the scanner (64) with six degrees of freedom within the three-dimensional space; and
the controller (42) is further configured to operate the at least one servo (68, 72, 76) of the second articulated arm (60) to move the scanner (64) in the three-dimensional space to positions opposite the object (46) to generate the topographical data for the generation of the three-dimensional map.

4. A method for operating an object printer comprising:
generating topographical data with a scanner (64) positioned opposite a surface of an object (46) to be printed;
receiving with a controller (42) the topographical data from the scanner (64);
determining with the controller (42) using the topographical data whether the surface of the object (46) can be printed by a printhead (26) moved in a three-dimensional space to a position opposite the surface of the object (46); and
operating the printhead (26) with the controller (42) to form an ink image on the surface of the object (46) when the controller (42) determines the surface of the object (46) can be printed by the printhead (26) and has moved the printhead (26) to the position opposite the surface of the object (46),
the method further comprising:
generating with the controller (42) a three-dimensional map of the surface of the object (46) using the topographical data from the scanner (64); and
storing the three-dimensional map in a memory operatively connected to the controller (42),
the method further comprising:
identifying with the controller (42) a first strip in the three-dimensional map stored in the memory;
determining with the controller (42) whether an area in the first strip is within a maximum distance for accurate ink drop placement when the printhead (26) is moved to a position opposite a surface area of the object (46) that corresponds to the area in the first strip where no inkjet in the printhead (26) is closer than a minimum distance for accurate ink drop placement; and
deleting with the controller (42) the area in the first strip from the three-dimensional map stored in the memory when any portion of the surface area of the object (46) corresponding to the area in the first strip is outside the maximum distance for accurate ink drop placement when the printhead (26) is moved to the position opposite the surface area corresponding to the area in the first strip where no inkjet in the printhead (26) is closer than a minimum distance for accurate ink drop placement,
the method further comprising:
comparing with the controller (42) the maximum distance for accurate ink drop placement to distances between nozzles in the printhead (26) and portions of the surface area of the object (46) that are opposite the nozzles when the printhead (26) is moved to the position opposite the surface area that corresponds to the area in the first strip where no inkjet in the printhead (26) is closer than a minimum distance for accurate ink drop placement; and
determining with the controller (42) that the surface area that corresponds to the area in the first strip can be printed by the printhead (26) positioned opposite the surface area that corresponds to the area in the first strip where no inkjet in the printhead (26) is closer than a minimum distance for accurate ink drop placement when all the distances between the nozzles and the portions of the surface area of the object (46) that are opposite the nozzles are within the maximum distance for accurate ink drop placement,
the method further comprising:
identifying with the controller (42) a plurality of additional areas in the first strip in a process direction;
determining with the controller (42) whether each additional area in the plurality of additional areas in the first strip can be printed when the printhead (26) is moved to a position opposite the surface area of the object (46) that corresponds to each additional area; and
deleting with the controller (42) each area from the first strip in the three-dimensional map stored in the memory that cannot be printed when the printhead (26) is moved to the position opposite the surface area of the object (46) that corresponds to the additional area that cannot be printed,
the method further comprising:
identifying with the controller (42) another strip in the three-dimensional map stored in the memory that is shifted from the first strip by at least one data position in the three-dimensional map in the cross-process direction;
identifying with the controller (42) a plurality of areas in the other strip;
determining with the controller (42) whether each area in the plurality of areas in the other strip can be printed when the printhead (26) is moved to a position opposite the surface area of the object (46) that corresponds to each area in the plurality of areas in the other strip; and
deleting with the controller (42) each area from the other strip in the three-dimensional map stored in the memory that cannot be printed when the printhead (26) is moved to the position opposite the surface area of the object (46) that corresponds to the area in the other strip,
the method further comprising:
identifying with the controller (42) additional strips in the three-dimensional map that are shifted from a previous strip by at least one data position in the three-dimensional map in the cross-process direction;
determining with the controller (42) whether each area in each of the additional strips can be printed when the printhead (26) is moved to a position opposite the surface area of the object (46) that corresponds to each area in each of the additional strips; and
deleting with the controller (42) each area from the additional strips in the three-dimensional map stored in the memory that cannot be printed when the printhead (26) is moved to the position opposite the surface area of the object (46) that corresponds to the area in one of the additional strips,
the method further comprising and being **characterized by**:
displaying with the controller (42) the three-dimensional map stored in the memory on a user interface after all of the strips in the three-dimensional map have been identified and all of the areas in each strip have been removed from the three-dimensional map that cannot be printed when the printhead (26) is moved to the position opposite the surface area of the object (46) that corresponds to the area; and
receiving with the controller (42) input from the user interface that identifies the areas in the displayed three-dimensional map that correspond to a surface area of the object (46) where an ink image is to be printed.

5. The method of claim 4 further comprising:
operating with the controller (42) at least one servo (18, 22, 50, 54) of a first articulated arm (14) to which the printhead (26) is mounted to move the printhead (26) in the three-dimensional space to positions opposite the surface area of the object (46) corresponding to the identified areas; and
operating with the controller (42) the printhead (26) to form the ink image on the surface area of the object (46) corresponding to the identified areas.

6. The object printer of claim 2 further comprising:
operating with the controller (42) at least one servo (68, 72, 76) of a second articulated arm (60) to which the scanner (64) is mounted to move the scanner (64) in the three-dimensional space to positions opposite the object (46) to generate the topographical data for the generation of the three-dimensional map.

## Patentansprüche

1. Objektdrucker, umfassend:
einen Druckkopf (26), der konfiguriert ist für eine Bewegung in einem dreidimensionalen Raum,
einen Scanner (64), der konfiguriert ist zum Erzeugen von topographischen Daten einer Oberfläche eines Objekts (46) gegenüber dem Scanner (64), und
eine Steuereinrichtung (42), die operativ mit dem Druckkopf (26) und dem Scanner (64) verbunden ist, wobei die Steuereinrichtung (42) konfiguriert ist zum Empfangen der topographischen Daten von dem Scanner (64), zum Bestimmen, unter Verwendung der topographischen Daten, ob die Oberfläche des Objekts (46) durch den Druckkopf (26) bedruckt werden kann, wenn sich der Druckkopf (26) gegenüber der Oberfläche des Objekts (46) befindet, und zum Betreiben des Druckkopfs (26), wenn sich der Druckkopf gegenüber der Oberfläche des Objekts (46) befindet, für das Bilden eines Tintenbilds auf der Oberfläche des Objekts (46), wenn die Steuereinrichtung (42) bestimmt, dass die Oberfläche des Objekts (46) durch den Druckkopf (26) bedruckt werden kann,
wobei die Steuereinrichtung (42) weiterhin konfiguriert ist zum:
Erzeugen einer dreidimensionalen Karte der Oberfläche des Objekts (46) unter Verwendung der topographischen Daten von dem Scanner (64), und
Speichern der dreidimensionalen Karte in einem Speicher, der operativ mit der Steuereinrichtung (42) verbunden ist,
wobei die Steuereinrichtung (42) weiterhin konfiguriert ist zum:
Identifizieren eines ersten Streifens in der in dem Speicher gespeicherten dreidimensionalen Karte,
Bestimmen, ob sich einer der Tintenstrahlen in dem Druckkopf (26) außerhalb einer maximalen Distanz für eine genaue Tintentröpfchenplatzierung von einem Bereich in dem ersten Streifen befindet, wenn der Druckkopf (26) zu einer Position gegenüber einem Oberflächenbereich des Objekts (46) in Entsprechung zu dem Bereich in dem ersten Streifen, in dem kein Tintenstrahl in dem Druckkopf (26) näher als eine minimale Distanz für eine genaue Tintentröpfchenplatzierung ist, bewegt wird, und
Löschen des Bereichs in dem ersten Streifen aus der in dem Speicher gespeicherten dreidimensionalen Karte, wenn ein Teil des Oberflächenbereichs des Objekts (46) in Entsprechung zu dem Bereich in dem ersten Streifen außerhalb der maximalen Distanz für eine genaue Tintentröpfchenplatzierung liegt, wenn der Druckkopf (26) zu der Position gegenüber dem Oberflächenbereich in Entsprechung zu dem Bereich in dem ersten Streifen, in dem kein Tintenstrahl in dem Druckkopf (26) näher als eine minimale Distanz für eine genaue Tintentröpfchenplatzierung ist, bewegt wird,
wobei die Steuereinrichtung (42) weiterhin konfiguriert ist zum:
Vergleichen der maximalen Distanz für eine genaue Tintentröpfchenplatzierung mit Distanzen zwischen Düsen in dem Druckkopf (26) und Teilen des Oberflächenbereichs des Objekts (46), die den Düsen gegenüberliegen, wenn der Druckkopf (26) zu der Position gegenüber dem Oberflächenbereich in Entsprechung zu dem Bereich in dem ersten Streifen, in dem kein Tintenstrahl in dem Druckkopf (26) näher als eine minimale Distanz für eine genaue Tintentröpfchenplatzierung ist, bewegt wird, und
Bestimmen, dass der Oberflächenbereich in Entsprechung zu dem Bereich in dem ersten Streifen durch den Druckkopf (26), der gegenüber der Oberflächenbereich in Entsprechung zu dem Bereich in dem ersten Streifen, in dem kein Tintenstrahl in dem Druckkopf (26) näher als eine minimale Distanz für eine genaue Tintentröpfchenplatzierung ist, positioniert ist, bedruckt werden kann, wenn alle Distanzen zwischen den Düsen und den Teilen des Oberflächenbereichs des Objekts (46) gegenüber den Düsen innerhalb der maximalen Distanz für eine genaue Tintentröpfchenplatzierung sind,
wobei die Steuereinrichtung (42) weiterhin konfiguriert ist zum:
Identifizieren einer Vielzahl von zusätzlichen Bereichen in dem ersten Streifen in einer Prozessrichtung,
Bestimmen, ob jeder zusätzliche Bereich in der Vielzahl von zusätzlichen Bereichen in dem ersten Streifen bedruckt werden kann, wenn der Druckkopf (26) zu einer Position gegenüber dem Oberflächenbereich des Objekts (46) in Entsprechung zu jedem zusätzlichen Bereich bewegt wird, und
Löschen jedes Bereichs aus dem ersten Streifen in der in dem Speicher gespeicherten dreidimensionalen Karte, der nicht bedruckt werden kann, wenn der Druckkopf (26) zu der Position gegenüber dem Oberflächenbereichs des Objekts (46) in Entsprechung zu dem zusätzlichen Bereich, der nicht bedruckt werden kann, bewegt wird,
wobei die Steuereinrichtung (42) konfiguriert ist zum:
Identifizieren eines anderen Streifens in der in dem Speicher gespeicherten dreidimensionalen Karte, der von dem ersten Streifen um wenigstens eine Datenposition in der dreidimensionalen Karte in der Querprozessrichtung versetzt ist,
Identifizieren einer Vielzahl von Bereichen in dem anderen Streifen,
Bestimmen, ob jeder Bereich in der Vielzahl von Bereichen in dem anderen Streifen bedruckt werden kann, wenn der Druckkopf (26) zu einer Position gegenüber dem Oberflächenbereich des Objekts (46) in Entsprechung zu jedem Bereich in der Vielzahl von Bereichen in dem anderen Streifen bewegt wird, und
Löschen jedes Bereichs aus dem anderen Streifen in der in dem Speicher gespeicherten dreidimensionalen Karte, der nicht bedruckt werden kann, wenn der Druckkopf (26) zu der Position gegenüber dem Oberflächenbereich des Objekts (46) in Entsprechung zu dem Bereich in dem anderen Streifen bewegt wird,
wobei die Steuereinrichtung (42) konfiguriert ist zum:
Identifizieren von zusätzlichen Streifen in der dreidimensionalen Karte, die von einem vorausgehenden Streifen um wenigstens eine Datenposition in der dreidimensionalen Karte in der Querprozessrichtung versetzt sind,
Bestimmen, ob jeder Bereich in jedem der zusätzlichen Streifen bedruckt werden kann, wenn der Druckkopf (26) zu einer Position gegenüber dem Oberflächenbereich des Objekts (46) in Entsprechung zu jedem Bereich in jedem der zusätzlichen Streifen bewegt wird, und
Löschen jedes Bereichs aus den zusätzlichen Streifen in der in dem Speicher gespeicherten dreidimensionalen Karte, der nicht bedruckt werden kann, wenn der Druckkopf (26) zu der Position gegenüber dem Oberflächenbereich des Objekts (46) in Entsprechung zu dem Bereich in einem der zusätzlichen Streifen bewegt wird,
wobei der Objektdrucker **dadurch gekennzeichnet ist, dass** die Steuereinrichtung (42) konfiguriert ist zum:
Anzeigen der in dem Speicher gespeicherten dreidimensionalen Karte an einer Benutzeroberfläche, nachdem alle Streifen in der dreidimensionalen Karte identifiziert wurden und alle Bereiche in jedem Streifen aus der dreidimensionalen Karte, die nicht bedruckt werden können, wenn der Druck (26) zu der Position gegenüber dem Oberflächenbereich des Objekts (46) in Entsprechung zu dem Bereich bewegt wird, entfernt wurden, und
Empfangen einer Eingabe von der Benutzeroberfläche, die die Bereiche in der angezeigten dreidimensionalen Karte identifiziert, die einem Oberflächenbereich des Objekts (46), in dem ein Tintenbild gedruckt werden soll, entsprechen.

2. Objektdrucker nach Anspruch 1, der weiterhin umfasst:
einen ersten Gelenkarm (14), an dem der Druckkopf montiert ist, wobei der erste Gelenkarm (14) wenigstens einen Servo (18, 22, 50, 54) aufweist, der konfiguriert ist zum Bewegen des Druckkopfs (26) mit sechs Freiheitsgraden innerhalb des dreidimensionalen Raums, und
die Steuereinrichtung (42) weiterhin konfiguriert ist zum Betreiben des wenigstens eines Servos (18, 22, 50, 54) des ersten Gelenkarms (14) für eine Bewegung des Druckkopfs (26) in dem dreidimensionalen Raum zu Positionen gegenüber dem Oberflächenbereich des Objekts (46) in Entsprechung zu den identifizierten Bereichen und zum Betreiben des Druckkopfs (26) für das Bilden eines Tintenbilds auf dem Oberflächenbereich des Objekts (46) in Entsprechung zu den identifizierten Bereichen.

3. Objektdrucker nach Anspruch 2, der weiterhin umfasst:
einen zweiten Gelenkarm (60), an dem der Scanner (64) montiert ist, wobei der zweite Gelenkarm (60) wenigstens einen Servo (68, 72, 76) aufweist, der konfiguriert ist zum Bewegen des Scanners (64) mit sechs Freiheitsgraden innerhalb des dreidimensionalen Raums,
wobei die Steuereinrichtung (42) weiterhin konfiguriert ist zum Betreiben des wenigstens einen Servos (68, 72, 76) des zweiten Gelenkarms (60) für eine Bewegung des Scanners (64) in dem dreidimensionalen Raum zu Positionen gegenüber dem Objekt (46), um die topographischen Daten für das Erzeugen der dreidimensionalen Karte zu erzeugen.

4. Verfahren zum Betreiben eines Objektdruckers, umfassend:
Erzeugen von topographischen Daten mit einem Scanner (64), der gegenüber einer Oberfläche eines zu bedruckenden Objekts (46) positioniert ist,
Empfangen, durch eine Steuereinrichtung (42), der topographischen Daten von dem Scanner (64),
Bestimmen, durch die Steuereinrichtung (42) und unter Verwendung der topographischen Daten, ob die Oberfläche des Objekts (46) durch einen Druckkopf (26), der in einem dreidimensionalen Raum zu einer Position gegenüber der Oberfläche des Objekts (46) bewegt wird, bedruckt werden kann, und
Betreiben des Druckkopfs (26) durch die Steuereinrichtung (42) für das Bilden eines Tintenbilds auf der Oberfläche des Objekts (46), wenn die Steuereinrichtung (42) bestimmt, dass die Oberfläche des Objekts (46) durch den Druckkopf (26) bedruckt werden kann, und den Druckkopf (26) zu der Position gegenüber der Oberfläche des Objekts (46) bewegt hat,
wobei das Verfahren weiterhin umfasst:
Erzeugen, durch die Steuereinrichtung (42), einer dreidimensionalen Karte der Oberfläche des Objekts (46) unter Verwendung der topographischen Daten von dem Scanner (64), und
Speichern der dreidimensionalen Karte in einem Speicher, der operativ mit der Steuereinrichtung (42) verbunden ist,
wobei das Verfahren weiterhin umfasst:
Identifizieren, durch die Steuereinrichtung (42), eines ersten Streifens in der in dem Speicher gespeicherten dreidimensionalen Karte,
Bestimmen, durch die Steuereinrichtung (42), ob ein Bereich in dem ersten Streifen innerhalb einer maximalen Distanz für eine genaue Tintentröpfchenplatzierung liegt, wenn der Druckkopf (26) zu einer Position gegenüber einem Oberflächenbereich des Objekts (46) in Entsprechung zu dem Bereich in dem ersten Streifen, in dem kein Tintenstrahl in dem Druckkopf (26) näher als eine minimale Distanz für eine genaue Tintentröpfchenplatzierung ist, bewegt wird, und
Löschen, durch die Steuereinrichtung (42), des Bereichs in dem ersten Streifen aus der in dem Speicher gespeicherten dreidimensionalen Karte, wenn ein Teil des Oberflächenbereichs des Objekts (46) in Entsprechung zu dem Bereich in dem ersten Streifen au-ßerhalb der maximalen Distanz für eine genaue Tintentröpfchenplatzierung liegt, wenn der Druckkopf (26) zu der Position gegenüber dem Oberflächenbereich in Entsprechung zu dem Bereich in dem ersten Streifen, in dem kein Tintenstrahl (26) näher als eine minimale Distanz für eine genaue Tintentröpfchenplatzierung ist, bewegt wird,
wobei das Verfahren weiterhin umfasst:
Vergleichen, durch die Steuereinrichtung (42) der maximalen Distanz für eine genaue Tintentröpfchenplatzierung mit Distanzen zwischen Düsen in dem Druckkopf (26) und Teilen des Oberflächenbereichs des Objekts (46), die den Düsen gegenüberliegen, wenn der Druckkopf (26) zu der Position gegenüber dem Oberflächenbereich in Entsprechung zu dem Bereich in dem ersten Streifen, in dem kein Tintenstrahl in dem Druckkopf (26) näher als eine minimale Distanz für eine genaue Tintentröpfchenplatzierung ist, bewegt wird, und
Bestimmen, durch die Steuereinrichtung (42), dass der Oberflächenbereich in Entsprechung zu dem Bereich in dem ersten Streifen durch den Druckkopf (26), der gegenüber dem Oberflächenbereich in Entsprechung zu dem Bereich in dem ersten Streifen, in dem kein Tintenstrahl in dem Druckkopf (26) näher als eine minimale Distanz für eine genaue Tintentröpfchenplatzierung ist, positioniert ist, bedruckt werden kann, wenn alle Distanzen zwischen den Düsen und den Teilen des Oberflächenbereichs des Objekts (46) gegenüber den Düsen innerhalb der maximalen Distanz für eine genaue Tintentröpfchenplatzierung liegen,
wobei das Verfahren weiterhin umfasst:
Identifizieren, durch die Steuereinrichtung (42), einer Vielzahl von zusätzlichen Bereichen in dem ersten Streifen in einer Prozessrichtung,
Bestimmen, durch die Steuereinrichtung (42), ob jeder zusätzliche Bereich in der Vielzahl von zusätzlichen Bereichen in dem ersten Streifen bedruckt werden kann, wenn der Druckkopf (26) zu einer Position gegenüber dem Oberflächenbereich des Objekts (46) in Entsprechung zu jedem zusätzlichen Bereich bewegt wird, und
Löschen, durch die Steuereinrichtung (42) jedes Bereichs aus dem ersten Streifen in der in dem Speicher gespeicherten dreidimensionalen Karte, der nicht bedruckt werden kann, wenn der Druckkopf (26) zu der Position gegenüber dem Oberflächenbereich des Objekts (46) in Entsprechung zu dem zusätzlichen Bereich, der nicht bedruckt werden kann, bewegt wird,
wobei das Verfahren weiterhin umfasst:
Identifizieren, durch die Steuereinrichtung (42) eines anderen Streifens in der in dem Speicher gespeicherten dreidimensionalen Karte, der von dem ersten Streifen um wenigstens eine Datenposition in der dreidimensionalen Karte in der Querprozessrichtung versetzt ist,
Identifizieren, durch die Steuereinrichtung (42), einer Vielzahl von Bereichen in dem anderen Streifen,
Bestimmen, durch die Steuereinrichtung (42), ob jeder Bereich in der Vielzahl von Bereichen in dem anderen Streifen bedruckt werden kann, wenn der Druckkopf (26) zu einer Position gegenüber dem Oberflächenbereich des Objekts (46) in Entsprechung zu jedem Bereich in der Vielzahl von Bereichen in dem anderen Streifen bewegt wird, und
Löschen, durch die Steuereinrichtung (42), jedes Bereichs aus dem anderen Streifen in der in dem Speicher gespeicherten dreidimensionalen Karte, der nicht bedruckt werden kann, wenn der Druckkopf (26) zu der Position gegenüber dem Oberflächenbereich des Objekts (46) in Entsprechung zu dem Bereich in dem anderen Streifen bewegt wird,
wobei das Verfahren weiterhin umfasst:
Identifizieren, durch die Steuereinrichtung (42), von zusätzlichen Streifen in der dreidimensionalen Karte, die von einem vorausgehenden Streifen um wenigstens eine Datenposition in der dreidimensionalen Karte in der Querprozessrichtung versetzt sind,
Bestimmen, durch die Steuereinrichtung (42), ob jeder Bereich in jedem der zusätzlichen Streifen bedruckt werden kann, wenn der Druckkopf (26) zu einer Position gegenüber dem Oberflächenbereich des Objekts (46) in Entsprechung zu jedem Bereich in jedem der zusätzlichen Streifen bewegt wird, und
Löschen, durch die Steuereinrichtung (42) jedes Bereichs aus den zusätzlichen Streifen in der in dem Speicher gespeicherten dreidimensionalen Karte, der nicht bedruckt werden kann, wenn der Druckkopf (26) zu der Position gegenüber dem Oberflächenbereich des Objekts (46) in Entsprechung zu dem Bereich in einem der zusätzlichen Streifen bewegt wird,
wobei das Verfahren weiterhin umfasst und **gekennzeichnet ist durch**:
Anzeigen, **durch** die Steuereinrichtung (42), der in dem Speicher gespeicherten dreidimensionalen Karte an einer Benutzeroberfläche, nachdem alle Streifen in der dreidimensionalen Karte identifiziert wurden und alle Bereiche in jedem Streifen aus der dreidimensionalen Karte, die nicht bedruckt werden können, wenn der Druckkopf (26) zu der Position gegenüber dem Oberflächenbereich des Objekts (46) in Entsprechung zu dem Bereich bewegt wird, entfernt wurden, und
Empfangen, **durch** die Steuereinrichtung (42) einer Eingabe von der Benutzerschnittstelle, die die Bereiche in der angezeigten dreidimensionalen Karte identifiziert, die einem Oberflächenbereich des Objekts (46), in dem ein Tintenbild gedruckt werden soll, entsprechen.

5. Verfahren nach Anspruch 4, das weiterhin umfasst:
Betreiben, durch die Steuereinrichtung (42) wenigstens eines Servos (18, 22, 50, 54) eines ersten Gelenkarms (14), an dem der Druckkopf (26) montiert ist, um den Druckkopf (26) in dem dreidimensionalen Raum zu Positionen gegenüber dem Oberflächenbereich des Objekts (46) in Entsprechung zu den identifizierten Bereichen zu bewegen, und
Betreiben, durch die Steuereinrichtung (42) des Druckkopfs (26), für das Bilden des Tintenbilds auf dem Oberflächenbereich des Objekts (46) in Entsprechung zu den identifizierten Bereichen.

6. Objektdrucker nach Anspruch 2, der weiterhin umfasst:
Betreiben, durch die Steuereinrichtung (42), wenigstens eines Servos (68, 72, 76) eines zweiten Gelenkarms (60), an dem der Scanner (64) montiert ist, für das Bewegen des Scanners (64) in dem dreidimensionalen Raum zu Positionen gegenüber dem Objekt (46), um die topographischen Daten für das Erzeugen der dreidimensionalen Karte zu erzeugen.

## Revendications

1. Dispositif d'impression d'objet comprenant :
une tête d'impression (26) configurée pour un mouvement dans un espace tridimensionnel ;
un analyseur à balayage (64) configuré pour générer des données topographiques d'une surface d'un objet (46) opposé à l'analyseur à balayage (64) ; et
un dispositif de commande (42) connecté de manière fonctionnelle à la tête d'impression (26) et à l'analyseur à balayage (64), le dispositif de commande (42) étant configuré pour recevoir les données topographiques provenant de l'analyseur à balayage (64), déterminer, à l'aide des données topographiques, si la surface de l'objet (46) peut être imprimée par la tête d'impression (26) lorsque la tête d'impression (26) est opposée à la surface de l'objet (46), et actionner la tête d'impression (26) lorsque la tête d'impression est opposée à la surface de l'objet (46) pour former une image d'encre sur la surface de l'objet (46) lorsque le dispositif de commande (42) détermine que la surface de l'objet (46) peut être imprimée par la tête d'impression (26),
dans lequel le dispositif de commande (42) est en outre configuré pour :
générer une carte tridimensionnelle de la surface de l'objet (46) à l'aide des données topographiques provenant de l'analyseur à balayage (64) ; et
stocker la carte tridimensionnelle dans une mémoire connectée de manière fonctionnelle au dispositif de commande (42),
le dispositif de commande (42) étant en outre configuré pour :
identifier une première bande dans la carte tridimensionnelle stockée dans la mémoire ;
déterminer si un quelconque jet d'encre dans la tête d'impression (26) est hors d'une distance maximale pour un placement précis de goutte d'encre par rapport à une zone dans la première bande lorsque la tête d'impression (26) est déplacée jusqu'à une position opposée à une zone superficielle de l'objet (46) qui correspond à la zone dans la première bande où aucun jet d'encre dans la tête d'impression (26) n'est plus proche qu'une distance minimale pour un placement précis de goutte d'encre ; et
supprimer la zone dans la première bande à partir de la carte tridimensionnelle stockée dans la mémoire lorsqu'une quelconque partie de la zone superficielle de l'objet (46) correspondant à la zone dans la première bande est hors de la distance maximale pour un placement précis de goutte d'encre lorsque la tête d'impression (26) est déplacée jusqu'à la position opposée à la zone superficielle correspondant à la zone dans la première bande où aucun jet d'encre dans la tête d'impression (26) n'est plus proche qu'une distance minimale pour un placement précis de goutte d'encre,
le dispositif de commande (42) est en outre configuré pour :
comparer la distance maximale pour un placement précis de goutte d'encre avec des distances entre des buses dans la tête d'impression (26) et des parties de la zone superficielle de l'objet (46) qui sont opposées aux buses lorsque la tête d'impression (26) est déplacée jusqu'à la position opposée à la zone superficielle qui correspond à la zone dans la première bande où aucun jet d'encre dans la tête d'impression (26) n'est plus proche qu'une distance minimale pour un placement précis de goutte d'encre ; et
déterminer que la zone superficielle qui correspond à la zone dans la première bande peut être imprimée par la tête d'impression (26) positionnée à l'opposé de la zone superficielle qui correspond à la zone dans la première bande où aucun jet d'encre dans la tête d'impression (26) n'est plus proche qu'une distance minimale pour un placement précis de goutte d'encre lorsque toutes les distances entre les buses et les parties de la zone superficielle de l'objet (46) qui sont opposées aux buses sont dans les limites de la distance maximale pour un placement précis de goutte d'encre,
le dispositif de commande (42) étant en outre configuré pour :
identifier une pluralité de zones supplémentaires dans la première bande dans une direction de traitement ;
déterminer si chaque zone supplémentaire dans la pluralité de zones supplémentaires dans la première bande peut être imprimée lorsque la tête d'impression (26) est déplacée jusqu'à une position opposée à la zone superficielle de l'objet (46) qui correspond à chaque zone supplémentaire ; et
supprimer chaque zone qui ne peut pas être imprimée à partir de la première bande dans la carte tridimensionnelle stockée dans la mémoire lorsque la tête d'impression (26) est déplacée jusqu'à la position opposée à la zone superficielle de l'objet (46) qui correspond à la zone supplémentaire qui ne peut pas être imprimée,
le dispositif de commande (42) étant configuré pour :
identifier une autre bande dans la carte tridimensionnelle stockée dans la mémoire qui est décalée par rapport à la première bande d'au moins une position de données dans la carte tridimensionnelle dans la direction transversale au traitement ;
identifier une pluralité de zones dans l'autre bande ;
déterminer si chaque zone dans la pluralité de zones dans l'autre bande peut être imprimée lorsque la tête d'impression (26) est déplacée jusqu'à une position opposée à la zone superficielle de l'objet (46) qui correspond à chaque zone dans la pluralité de zones dans l'autre bande ; et
supprimer chaque zone qui ne peut pas être imprimée à partir de l'autre bande dans la carte tridimensionnelle stockée dans la mémoire lorsque la tête d'impression (26) est déplacée jusqu'à la position opposée à la zone superficielle de l'objet (46) qui correspond à la zone dans l'autre bande,
le dispositif de commande (42) étant configuré pour :
identifier des bandes supplémentaires dans la carte tridimensionnelle qui sont décalées par rapport à une bande précédente d'au moins une position de données dans la carte tridimensionnelle dans la direction transversale au traitement ;
déterminer si chaque zone dans chacune des bandes supplémentaires peut être imprimée lorsque la tête d'impression (26) est déplacée jusqu'à une position opposée à la zone superficielle de l'objet (46) qui correspond à chaque zone dans chacune des bandes supplémentaires ; et
supprimer chaque zone qui ne peut pas être imprimée à partir des bandes supplémentaires dans la carte tridimensionnelle stockée dans la mémoire lorsque la tête d'impression (26) est déplacée jusqu'à la position opposée à la zone superficielle de l'objet (46) qui correspond à la zone dans l'une des bandes supplémentaires,
le dispositif d'impression d'objet étant **caractérisé en ce que** le dispositif de commande (42) est configuré pour :
afficher la carte tridimensionnelle stockée dans la mémoire sur une interface utilisateur après que toutes les bandes dans la carte tridimensionnelle ont été identifiées et toutes les zones qui ne peuvent pas être imprimées dans chaque bande ont été retirées de la carte tridimensionnelle lorsque la tête d'impression (26) est déplacée jusqu'à la position opposée à la zone superficielle de l'objet (46) qui correspond à la zone ; et
recevoir une entrée provenant de l'interface utilisateur qui identifie les zones dans la carte tridimensionnelle affichée qui correspondent à une zone superficielle de l'objet (46) où une image d'encre doit être imprimée.

2. Dispositif d'impression d'objet selon la revendication 1 comprenant en outre :
un premier bras articulé (14) sur lequel la tête d'impression est montée, le premier bras articulé (14) ayant au moins un servomécanisme (18, 22, 50, 54) qui est configuré pour déplacer la tête d'impression (26) avec six degrés de liberté au sein de l'espace tridimensionnel ; et
le dispositif de commande (42) est en outre configuré pour actionner le au moins un servomécanisme (18, 22, 50, 54) du premier bras articulé (14) pour déplacer la tête d'impression (26) dans l'espace tridimensionnel jusqu'à des positions opposées à la zone superficielle de l'objet (46) correspond aux zones identifiées et pour actionner la tête d'impression (26) pour former l'image d'encre sur la zone superficielle de l'objet (46) correspondant aux zones identifiées.

3. Dispositif d'impression d'objet selon la revendication 2 comprenant en outre :
un second bras articulé (60) sur lequel l'analyseur à balayage (64) est monté, le second bras articulé (60) ayant au moins un servomécanisme (68, 72, 76) qui est configuré pour déplacer l'analyseur à balayage (64) avec six degrés de liberté au sein de l'espace tridimensionnel ; et
le dispositif de commande (42) est en outre configuré pour actionner le au moins un servomécanisme (68, 72, 76) du second bras articulé (60) pour déplacer l'analyseur à balayage (64) dans l'espace tridimensionnel jusqu'à des positions opposées à l'objet (46) pour générer les données topographiques pour la génération de la carte tridimensionnelle.

4. Procédé de fonctionnement d'un dispositif d'impression d'objet comprenant :
la génération de données topographiques avec un analyseur à balayage (64) positionné à l'opposé d'une surface d'un objet (46) devant être imprimé ;
la réception, avec un dispositif de commande (42), des données topographiques provenant de l'analyseur à balayage (64) ;
la détermination, avec le dispositif de commande (42), à l'aide des données topographiques, de si la surface de l'objet (46) peut être imprimée par une tête d'impression (26) déplacée dans un espace tridimensionnel jusqu'à une position opposée à la surface de l'objet (46) ; et
l'actionnement de la tête d'impression (26) avec le dispositif de commande (42) pour former une image d'encre sur la surface de l'objet (46) lorsque le dispositif de commande (42) détermine que la surface de l'objet (46) peut être imprimée par la tête d'impression (26) et a déplacé la tête d'impression (26) jusqu'à la position opposée à la surface de l'objet (46),
le procédé comprenant en outre :
la génération, avec le dispositif de commande (42), d'une carte tridimensionnelle de la surface de l'objet (46) à l'aide des données topographiques provenant de l'analyseur à balayage (64) ; et
le stockage de la carte tridimensionnelle dans une mémoire connectée de manière fonctionnelle au dispositif de commande (42),
le procédé comprenant en outre :
l'identification, avec le dispositif de commande (42), d'une première bande dans la carte tridimensionnelle stockée dans la mémoire ;
la détermination, avec le dispositif de commande (42), de si une zone dans la première bande est dans les limites d'une distance maximale pour un placement précis de goutte d'encre lorsque la tête d'impression (26) est déplacée jusqu'à une position opposée à une zone superficielle de l'objet (46) qui correspond à la zone dans la première bande où aucun jet d'encre dans la tête d'impression (26) n'est plus proche qu'une distance minimale pour un placement précis de goutte d'encre ; et
la suppression, avec le dispositif de commande (42), de la zone dans la première bande à partir de la carte tridimensionnelle stockée dans la mémoire lorsqu'une quelconque partie de la zone superficielle de l'objet (46) correspondant à la zone dans la première bande est hors de la distance maximale pour un placement précis de goutte d'encre lorsque la tête d'impression (26) est déplacée jusqu'à la position opposée à la zone superficielle correspondant à la zone dans la première bande où aucun jet d'encre dans la tête d'impression (26) n'est plus proche qu'une distance minimale pour un placement précis de goutte d'encre,
le procédé comprenant en outre :
la comparaison, avec le dispositif de commande (42), de la distance maximale pour un placement précis de goutte d'encre avec des distances entre des buses dans la tête d'impression (26) et des parties de la zone superficielle de l'objet (46) qui sont opposées aux buses lorsque la tête d'impression (26) est déplacée jusqu'à la position opposée à la zone superficielle qui correspond à la zone dans la première bande où aucun jet d'encre dans la tête d'impression (26) n'est plus proche qu'une distance minimale pour un placement précis de goutte d'encre ; et
la détermination, avec le dispositif de commande (42), que la zone superficielle qui correspond à la zone dans la première bande peut être imprimée par la tête d'impression (26) positionnée à l'opposé de la zone superficielle qui correspond à la zone dans la première bande où aucun jet d'encre dans la tête d'impression (26) n'est plus proche qu'une distance minimale pour un placement précis de goutte d'encre lorsque toutes les distances entre les buses et les parties de la zone superficielle de l'objet (46) qui sont opposées aux buses sont dans les limites de la distance maximale pour un placement précis de goutte d'encre,
le procédé comprenant en outre :
l'identification, avec le dispositif de commande (42), d'une pluralité de zones supplémentaires dans la première bande dans une direction de traitement ;
la détermination, avec le dispositif de commande (42), de si chaque zone supplémentaire dans la pluralité de zones supplémentaires dans la première bande peut être imprimée lorsque la tête d'impression (26) est déplacée jusqu'à une position opposée à la zone superficielle de l'objet (46) qui correspond à chaque zone supplémentaire ; et
la suppression, avec le dispositif de commande (42), de chaque zone qui ne peut pas être imprimée à partir de la première bande dans la carte tridimensionnelle stockée dans la mémoire lorsque la tête d'impression (26) est déplacée jusqu'à la position opposée à la zone superficielle de l'objet (46) qui correspond à la zone supplémentaire qui ne peut pas être imprimée,
le procédé comprenant en outre :
l'identification, avec le dispositif de commande (42), d'une autre bande dans la carte tridimensionnelle stockée dans la mémoire qui est décalée par rapport à la première bande d'au moins une position de données dans la carte tridimensionnelle dans la direction transversale au traitement ;
l'identification, avec le dispositif de commande (42), d'une pluralité de zones dans l'autre bande ;
la détermination, avec le dispositif de commande (42), de si chaque zone dans la pluralité de zones dans l'autre bande peut être imprimée lorsque la tête d'impression (26) est déplacée jusqu'à une position opposée à la zone superficielle de l'objet (46) qui correspond à chaque zone dans la pluralité de zones dans l'autre bande ; et
la suppression, avec le dispositif de commande (42), de chaque zone qui ne peut pas être imprimée à partir de l'autre bande dans la carte tridimensionnelle stockée dans la mémoire lorsque la tête d'impression (26) est déplacée jusqu'à la position opposée à la zone superficielle de l'objet (46) qui correspond à la zone dans l'autre bande,
le procédé comprenant en outre :
l'identification, avec le dispositif de commande (42), de bandes supplémentaires dans la carte tridimensionnelle qui sont décalées par rapport à une bande précédente d'au moins une position de données dans la carte tridimensionnelle dans la direction transversale au traitement ;
la détermination, avec le dispositif de commande (42), de si chaque zone dans chacune des bandes supplémentaires peut être imprimée lorsque la tête d'impression (26) est déplacée jusqu'à une position opposée à la zone superficielle de l'objet (46) qui correspond à chaque zone dans chacune des bandes supplémentaires ; et
la suppression, avec le dispositif de commande (42), de chaque zone qui ne peut pas être imprimée à partir des bandes supplémentaires dans la carte tridimensionnelle stockée dans la mémoire lorsque la tête d'impression (26) est déplacée jusqu'à la position opposée à la zone superficielle de l'objet (46) qui correspond à la zone dans l'une des bandes supplémentaires,
le procédé comprenant en outre et étant **caractérisé par** :
l'affichage, avec le dispositif de commande (42), de la carte tridimensionnelle stockée dans la mémoire sur une interface utilisateur après que toutes les bandes dans la carte tridimensionnelle ont été identifiées et toutes les zones qui ne peuvent pas être imprimées dans chaque bande ont été retirées de la carte tridimensionnelle lorsque la tête d'impression (26) est déplacée jusqu'à la position opposée à la zone superficielle de l'objet (46) qui correspond à la zone ; et
la réception, avec le dispositif de commande (42), d'une entrée provenant de l'interface utilisateur qui identifie les zones dans la carte tridimensionnelle affichée qui correspondent à une zone superficielle de l'objet (46) où une image d'encre doit être imprimée.

5. Procédé selon la revendication 4 comprenant en outre :
l'actionnement, avec le dispositif de commande (42), d'au moins un servomécanisme (18, 22, 50, 54) d'un premier bras articulé (14) sur lequel la tête d'impression (26) est montée pour déplacer la tête d'impression (26) dans l'espace tridimensionnel jusqu'à des positions opposées à la zone superficielle de l'objet (46) correspond aux zones identifiées ; et
l'actionnement, avec le dispositif de commande (42), de la tête d'impression (26) pour former l'image d'encre sur la zone superficielle de l'objet (46) correspondant aux zones identifiées.

6. Dispositif d'impression d'objet selon la revendication 2 comprenant en outre :
l'actionnement, avec le dispositif de commande (42), d'au moins un servomécanisme (68, 72, 76) d'un second bras articulé (60) sur lequel l'analyseur à balayage (64) est monté pour déplacer l'analyseur à balayage (64) dans l'espace tridimensionnel jusqu'à des positions opposées à l'objet (46) pour générer les données topographiques pour la génération de la carte tridimensionnelle.
